# EUROPÄISCHE PATENTSCHRIFT

(11) **EP 3 790 788 B1**
(45) Veröffentlichungstag und Bekanntmachung des Hinweises auf die Patenterteilung: **30.10.2024**
(21) Anmeldenummer: 19722554.3
(22) Anmeldetag: 30.04.2019
(51) Int. Cl.: B62K 21/12

(54) **FAHRRADLENKER-AUFLIEGER**
BICYCLE HANDLEBAR SUPPORT
CINTRE DE GUIDON DE VÉLO

(30) Priorität: 05.05.2018 DE 202018002222 U
(43) Veröffentlichungstag der Anmeldung: 17.03.2021
(73) Patentinhaber: Canyon Bicycles GmbH, 56073 Koblenz (DE)
(72) Erfinder: SCHELHAAS, Clemens, 41515 Grevenbroich (DE)
(74) Vertreter: dompatent von Kreisler Selting Werner - Partnerschaft von Patent- und Rechtsanwälten mbB
(86) Internationale Anmeldenummer: PCT/EP2019/061086
(87) Internationale Veröffentlichungsnummer: WO 2019/228737

(56) Entgegenhaltungen:
- DE-A1- 102013 008 694
- DE-A1- 102013 008 694
- FR-A1- 2 678 231
- FR-A1- 2 678 231
- US-A- 5 145 210
- US-A- 5 275 067
- US-A1- 2010 326 232
- US-A1- 2010 326 232

## Beschreibung

Die Erfindung betrifft einen Fahrradlenker-Auflieger, der insbesondere für Zeit- oder Triathlon-Fahrräder geeignet ist.

Rennräder besitzen für die Disziplin Zeitfahren eine Erweiterung des Lenkers um einen sogenannten Auflieger (Extension) oder Steuer- und Bedienelement für ein Zeitfahrfahrrad zur Benutzung in Zeitfahrposition, der gegenüber dem Lenker eine vorgestreckte Position der Arme ermöglicht, sowie das Abstützen des Oberkörpers über die Ellbogen.

Der Zweck eines Aufliegers ist ein gegenüber einer Fahrerposition mit einem üblichen Rennradlenker geringerer Luftwiderstand und eine Entlastung der Arme und des Oberkörpers. Üblicherweise besteht der Auflieger aus einem Klemmelement, das insbesondere zur Befestigung an einem Fahrradlenker dient, zwei nach vorne ausgerichteten Rohrelementen, den mit den in Fahrtrichtung nach vorne weisenden Enden der Rohrelemente verbundenen Griffen und den Armauflagen. Üblich ist die Befestigung von Schalterelementen zur Betätigung der Kettenschaltung am vordersten Ende der Rohrelemente nahe der Hand. Die Klemmung mittels der Klemmelemente dient der Befestigung des Aufliegers mit der Lenkung, entweder am Lenker direkt oder am Lenkervorbau. Es sind auch Varianten möglich, wo Lenker und Auflieger, oder Lenkervorbau und Auflieger, oder Lenker mit Lenkervorbau und Auflieger als ein Teil ausgeführt sind. Die beiden üblicherweise runden Rohrelemente des Aufliegers sind von den Klemmelementen ausgehend annähernd parallel nach vorne ausgerichtet und gehen in die Griffe über, die eine Fortsetzung der Rohre darstellen und meist mit Lenkerband umwickelt sind. Ebenso können Griffelemente auf die Enden der Rohrelemente beispielsweise aufgesteckt sein.

Zur Verbesserung der Ergonomie werden die Rohrelemente im Bereich der Griffe aufwärts und/oder auch nach innen gebogen. Zur Erzielung eines niedrigen Luftwiderstandes wird der Abstand der Griffe zueinander und somit der Rohrabstand möglichst klein gehalten. Die bekannten Lösungen mit zwei Griffen und den die Griffelemente umschließenden Händen ergeben eine große Stirnfläche mit gro-ßem Luftwiderstand. Die mögliche Handhaltung an einem runden Rohrelement bzw. runden Griffelement entspricht nur unzureichend einer natürlichen und ergonomisch günstigen Handhaltung. Die Armauflagen sind mit Klemmelementen befestigt und haben gegenüber den Rohren einen etwas größeren Abstand zueinander. Der Fahrer legt seine Unterarme nahe der Ellbogen auf den gepolsterten Armauflagen ab. Der Abstand der Armauflagen zueinander sollte für einen geringen Luftwiderstand möglichst klein sein. Für einen möglichst geringen Luftwiderstand ergibt sich aus den Positionen der Griffelemente und der Armauflagen eine möglichst parallele Position der Unterarme zueinander. Bei den bekannten Lösungen ergibt sich bei der für diese Bauart aerodynamisch günstigste Anordnung von Griffelementen und Armauflagen eine sehr unbequeme Position, die trainiert werden muss und eine messbare Halteleistung erfordert. Die Oberkörper- und Armmuskulatur ermüdet stark, was mit zunehmender Fahrtstrecke negativen Einfluss auf die Fahrgeschwindigkeit hat. In der Praxis führt dies zu häufigen Griffwechseln, um den Körper zu entlasten. Dies führt zur Erhöhung des Luftwiderstands. Ferner sind die Bedienungselemente oft nicht in Griffweite, was zum Umgreifen und zu Verzögerungen durch erhöhten Luftwiderstand führt.

Beim Triathlon wird nach der Disziplin Radfahren gelaufen und auch hier hat die vorangegangene Halteleistung einen negativen Einfluss auf die Ermüdung des Athleten und in Folge dessen auf die Laufgeschwindigkeit.

Die Anordnung der Bedienelemente für die Schaltelemente ergibt sich bei bekannten Lösungen aus der möglichen Anbauposition am in Fahrtrichtung vorderen Ende der Rohrelemente bzw. der Griffelemente. Die Anbauposition elektronischer Schalter für elektronische Schaltungen ergibt sich aus den Montagemöglichkeiten am Rohr und nicht nach ergonomischen Gesichtspunkten, so dass zum Schalten die Handposition geändert werden muss. Zusatzinstrumente wie z.B. Fahrradcomputer können nur durch Abnehmen der Hände von den Griffen bedient werden, wodurch der Luftwiderstand ansteigt und die Aufmerksamkeit des Athleten abgelenkt wird.

Aus FR 2,678,231 ist ein Fahrradlenker-Auflieger bekannt, der neben einem Mittelteil Unterarmauflagen aufweist. Am vorderen Ende sind zwei Griffelemente, für jeweils einen der beiden Hände vorgesehen, wobei die beiden Griffelemente über einen Steg miteinander verbunden sind.

Ferner ist aus US 5,145,210, das alle Merkmale der Präambel des unabhängigen Anspruchs 1 offenbart, ein Fahrradlenker-Auflieger bekannt, der auch Unterarmauflagen aufweist. In einem vorderen mittleren Bereich des Lenkers ist ein nach unten weisendes Griffelement vorgesehen, das von einem Griffband umwickelt ist und von beiden Händen gegriffen werden kann.

Aufgabe der Erfindung ist es, einen Fahrradlenker-Auflieger zu schaffen, mit dem eine möglichst aerodynamisch günstige Position des Radfahrers bei gleichzeitiger Verbesserung der Ergonomie erzielt werden kann.

Die Lösung der Aufgabe erfolgt durch einen Fahrradlenker-Auflieger, der insbesondere für Zeit- oder Triathlonfahrräder geeignet ist mit den Merkmalen des Anspruchs 1.

Der erfindungsgemäße Fahrradlenker-Auflieger weist ein zentrales Halteelement oder ein Mittelteil auf. Dieses ist vorzugsweise über ein Klemm- und/oder Fixierelement unmittelbar mit dem Lenker und/oder dem Lenkervorbau und/oder dem Steuerrohr verbunden. Insofern weist das Halteelement in montiertem Zustand in Fahrtrichtung bzw. in Längsrichtung des Fahrradrahmens. Ferner weist der erfindungsgemäße Fahrradlenker-Auflieger zwei Armauflagen auf, die zur Auflage der Unterarme des Benutzers im Bereich der bzw. nahe der Ellbogen dienen. Die beiden Armauflagen sind jeweils seitlich neben dem Halteelement angeordnet. Hierbei können die Armauflagen beispielsweise gesondert mit dem Lenker über ein Klemmelement oder dergleichen verbunden sein. Bevorzugt ist es, dass die Armauflagen mit dem Halteelement verbunden sind und insbesondere einstückig mit diesem ausgebildet sind. Erfindungsgemäß ist in einem vorderen Bereich des Halteelements, d.h. in dem in Fahrtrichtung weisenden vorderen Bereich des Halteelements ein gemeinsames Griffelement angeordnet. Erfindungsgemäß wird das gemeinsame Griffelement gleichzeitig von beiden Händen gehalten. Der erfindungsgemäße Fahrradlenker-Auflieger weist somit nicht zwei Rohrelemente mit gesonderten, an den Enden der Rohrelemente vorgesehenen Griffelementen auf, sondern ein einziges zentrales Halteelement bzw. Mittelteil, an dessen in Fahrtrichtung vorderem Ende ein gemeinsames Griffelement für beide Hände vorgesehen ist.

Erfindungsgemäße ist das gemeinsame Griffelement zu einer Längsrichtung unsymmetrisch ausgebildet. Das Griffelement ist somit bezogen auf die Fahrtrichtung unsymmetrisch ausgebildet. Hierdurch ist es insbesondere möglich, beide Hände am Griffelement anzuordnen. Dies erfolgt in bevorzugter Ausführungsform derart, dass eine Hand unmittelbar das Griffelement zumindest teilweise umfasst und die andere Hand zumindest teilweise die erste Hand umfasst bzw. umgreift. Die Hände überdecken sich in der Greifposition somit teilweise, wobei sich insbesondere die Finger der beiden Hände überdecken.

Das Griffelement weist erfindungsgemäß zwei Daumen-Auflagebereiche auf. Diese sind an der Oberseite des Griffelements angeordnet und insbesondere einander gegenüberliegend. Bei Benutzung des Fahrradlenker-Aufliegers sind die beiden Daumen bezogen auf eine Mittelinie bzw. auf die Fahrtrichtung auf einer linken oder auf einer rechten Seite des Halteelements angeordnet.

Erfindungsgemäß sind zwischen oder unter den beiden Daumen-Auflagenbereichen Schaltelemente vorgesehen. Dies hat den Vorteil, dass diese auf einfache Weise zugänglich sind. Gegebenenfalls können weitere Schaltelemente an einem vorderen Ende des Griffelements, d.h. an einem in Fahrtrichtung vorderen Ende des Griffelements angeordnet sein. Auch diese sind durch die Daumen oder die Zeigefinger einfach betätigbar.

Bei den einzelnen Schaltelementen kann es sich um mechanische Schaltelemente handeln, wobei es sich bevorzugt um elektronische Schaltelemente bzw. elektrische Schalter handelt. Mit diesen kann die Schaltung an der Hinterradnabe, ein Umwerfer an den Kettenblättern oder auch andere Bauteile betätigt werden. Bei elektronischen Schaltelementen kann es sich insbesondere um Druck-, Kipp- und/oder Drehschalter handeln. Die Kommunikation zwischen den einzelnen Bauteilen kann hierbei kabelgebunden oder kabellos sein. Bei einer kabellosen Datenübertragung sind insbesondere im Halteelement Sender und/oder Empfänger vorgesehen.

Bei einer weiteren bevorzugten Ausführungsform des Fahrradlenker-Aufliegers sind mit dem Halteelement Zusatz-Handauflagen vorgesehen. Die Zusatz-Handauflagen sind insbesondere in einem vorderen Bereich des Halteelements, d.h. in einen Bereich unter dem gemeinsamen Griffelement angeordnet. Diese Zusatz-Handauflagen dienen zur Auflage der Handunterseite, so dass eine zusätzliche Abstützung möglich ist. Die Zusatz-Handauflagen sind vorzugsweise einstückig mit dem Halteelement ausgebildet.

Bei einer weiteren bevorzugten Ausführungsform des Fahrradlenker-Aufliegers sind mit dem Halteelement Zusatz-Armauflagen vorgesehen. Die Zusatz-Armauflagen sind insbesondere in einem mittleren Bereich des Halteelements, d.h. in einen Bereich zwischen den Armauflagen und dem gemeinsamen Griffelement angeordnet. Diese Zusatz-Armauflagen dienen zur Auflage eines mittleren Bereichs des Unterarms, so dass eine zusätzliche Abstützung möglich ist. Die Zusatz-Armauflagen sind vorzugsweise einstückig mit dem Halteelement ausgebildet.

Des Weiteren ist es möglich, in einem mittleren Bereich des Halteelements ein Anschlusselement wie einen Steckplatz und/oder ein Halteelement für Zusatzinstrumente wie einen Fahrradcomputer, ein Mobiltelefon oder dergleichen vorzusehen.

Ebenso kann das Halteelement einen Hohlraum aufweisen, in dem unmittelbar Flüssigkeit vorgesehen werden kann. Ebenso könnte in dem Hohlraum ein Trinkbehälter oder eine Trinkblase angeordnet werden. Vorzugsweise ist sodann mit dem Hohlraum beispielsweise ein Trinkhalm verbunden.

Bei einer hohlen Ausgestaltung des Halteelements kann dieses einerseits zur Aufnahme von Flüssigkeiten, aber auch als Stauraum, beispielsweise zur Aufnahme von Nahrung, Elektronikkomponenten wie Beleuchtung, Messgerät oder Steuergeräte oder auch zur Aufnahme von Werkzeug und Ersatzteilen dienen.

Durch die erfindungsgemäße Anordnung der Hände an einem gemeinsamen Griffelement ist der Luftwiderstand deutlich reduziert. Dies führt zur Erhöhung der Geschwindigkeit bei gleicher Leistung. Ferner sind die Hände gegenüber dem Ellbogen sehr weit innen angeordnet. Dies führt zu einer deutlich entspannteren Sitzposition und damit zu einer Verringerung der erforderlichen Haltekraft, was wiederum zu einer Reduzierung der Halteleistung und des Energieverbrauchs führt.

Auch die bevorzugte Anordnung der Daumen, die im Wesentlichen parallel zueinander angeordnet sind, führt dazu, dass der Luftwiderstand gering ist.

Das Griffelement bildet zusammen mit den Händen eine Einheit, so dass ein strömungsgünstiger Körper ausgebildet ist. Dies führt wiederum zur Reduzierung des Luftwiderstands und zur Verbesserung des Komforts.

Durch die bevorzugte unsymmetrische Ausgestaltung des Griffelements kann eine symmetrische ergonomische Haltung des Fahrradfahrers erzielt werden. Dies hat eine geringere Ermüdung des Fahrradfahrers zur Folge.

In vorteilhafter Weiterbildung ist das Griffelement derart asymmetrisch ausgebildet, dass die Asymmetrie entweder für einen Links- oder einen Rechtshänder ausgebildet ist. Je nach Ausgestaltung kann somit die linke oder die rechte Hand das Griffelement umgreifen, wobei die jeweils andere Hand diese Hand dann umgreift.

Nachfolgend wird die Erfindung anhand einer bevorzugten Ausführungsform unter Bezugnahme auf die anliegenden Zeichnungen näher erläutert.

Es zeigen:

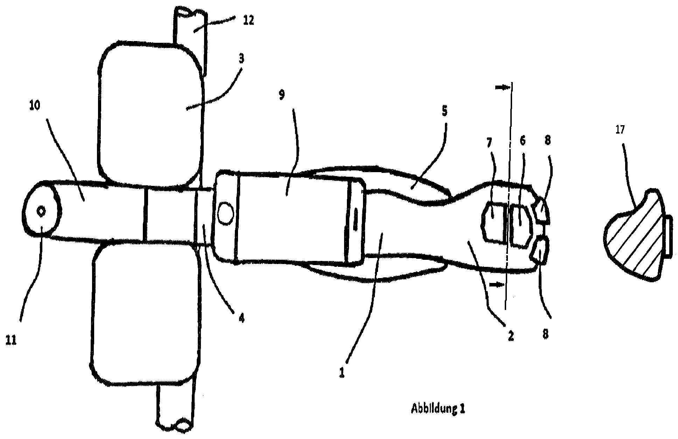

- Abbildung 1: den Auflieger in der Draufsicht,
- Abbildung 2: den Auflieger mit Unterarmen und Händen in der Fahrposition und in der Draufsicht,
- Abbildung 3: den Auflieger in der Ausführung für Rechtshänder von links,
- Abbildung 4: den Auflieger in der Ausführung für Rechtshänder von rechts,
- Abbildung 5: den Auflieger in der Ausführung für Rechtshänder von links mit Unterarm, Hand und Fingern in Fahrposition,
- Abbildung 6: den Auflieger in der Ausführung für Rechtshänder in der Ansicht von links mit Unterarmen, Händen und Fingern in Fahrposition, und
- Abbildung 7: den Auflieger in der Ausführung für Rechtshänder von rechts gesehen mit rechtem Unterarm, rechter Hand und Fingern der linken Hand in Fahrposition.

Der Auflieger 1 besteht in der gezeigten Variante aus dem unsymmetrischen Griffelement bzw. Griff 2 für Rechtshänder, der Armauflage 3 und dem Halteelement bzw. Mittelteil 4. Die Armauflage 5 befindet sich unterhalb des Griffs 2. Auf dem Griff sind die elektronischen Schaltelemente bzw. Schalter 6 zum Hochschalten der Gangschaltung und Schalter 7 zum Runterschalten positioniert. Die Schalter 8 sind am Vorderteil des Griffes 2 positioniert und dienen zur Bedienung des Smartphones oder Fahrradcomputers 9. Der Lenkervorbau 10 ist an das Steuerrohr 11 befestigt, das den Lenker 12 aufnimmt. Lenkervorbau 10 und Auflieger 1 sind miteinander verbunden. Das elektronische Anzeigeinstrument 9 (Smartphone oder Fahrradcomputer) befindet sich oberhalb des Mittelteils 4.

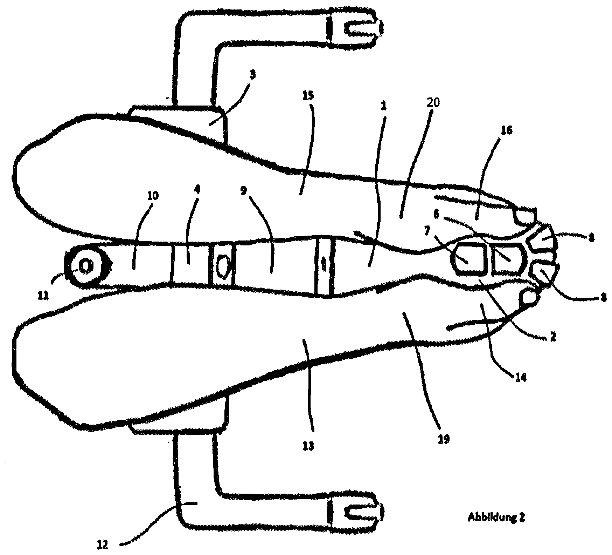

Abbildung 2 zeigt den Auflieger 1 mit Unterarmen und Händen 18,19 in der Fahrposition und in der Draufsicht. Die Daumen 14, 16 liegen in Fahrtrichtung nach vorne nahezu parallel nach vorne gerichtet auf den Griff auf. Die Schalter 7, 6 sind ohne Änderung der Handposition, lediglich mit einer Positionsänderung des Daumens 14, 16 zu betätigen. Die Schalter 8 werden ohne Änderung der Hand 18, 19 lediglich mit einer Positionsänderung der Zeigefinger betätigt.

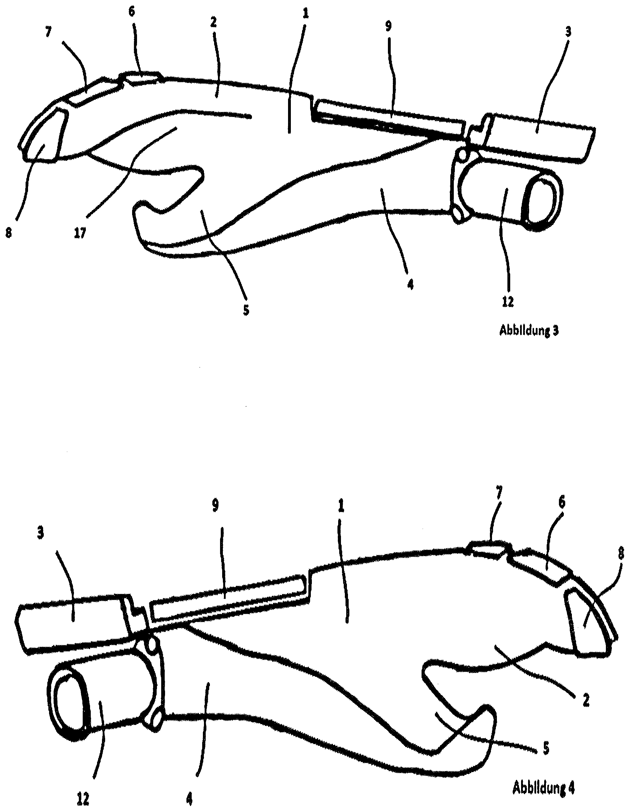

Abbildung 3 zeigt den Auflieger 1 für Rechtshänder in der Seitenansicht von links. Im Vorderteil 2 befindet sich unterhalb der Schalter 6,7 eine Einbuchtung 17 zur Aufnahme der Finger der rechten Hand.

Abbildung 4 zeigt den Auflieger 1 für Rechtshänder in der Ansicht von rechts. Der unsymmetrische Griff 2 hat auf der rechten Seite keine Einbuchtung zur Aufnahme von Fingern, sondern wird mit der Handinnenfläche der rechten Hand 19 umschlossen.

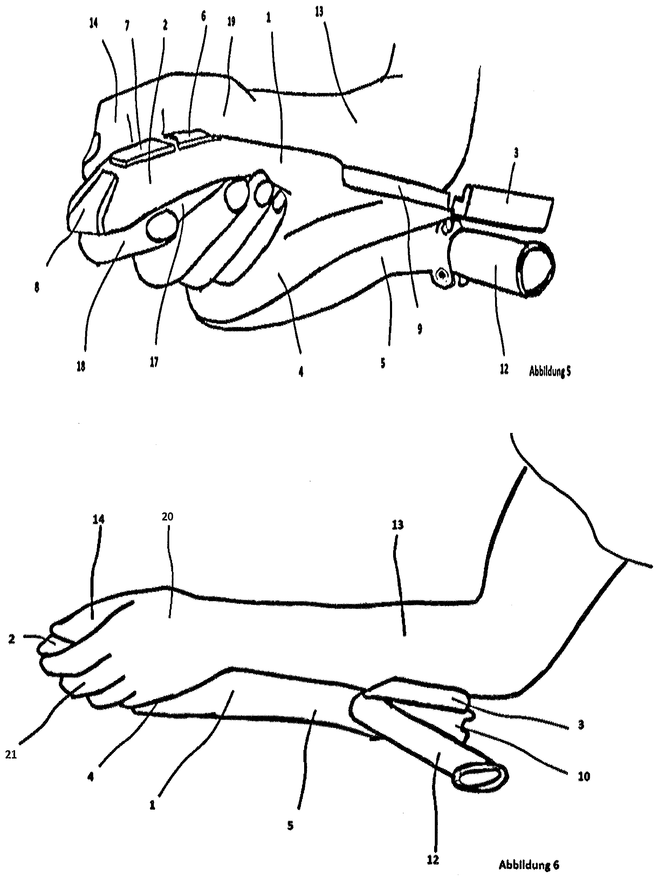

Abbildung 5 zeigt den Auflieger 1 für Rechtshänder in der Seitenansicht von links. Die rechte Hand umschließt den unsymmetrischen Griff 2, wobei die Finger 18 von unten in die Einbuchtung 17 gelegt werden. Der Unterarm 13 liegt auf die Armauflagen 3 auf. Der Daumen 14 liegt auf den Griff 2 auf und zeigt in Fahrtrichtung nach vorne.

Abbildung 6 zeigt den Auflieger in der Ausführung für Rechtshänder von links gesehen mit Unterarm 15, Hand 19 und Fingern 20 der linken Hand 18 in Griffposition. Die Finger 18 der rechten Hand 19 liegen unter den Fingern der linken Hand 21 und werden in dieser Ansicht nahezu vollständig verdeckt.

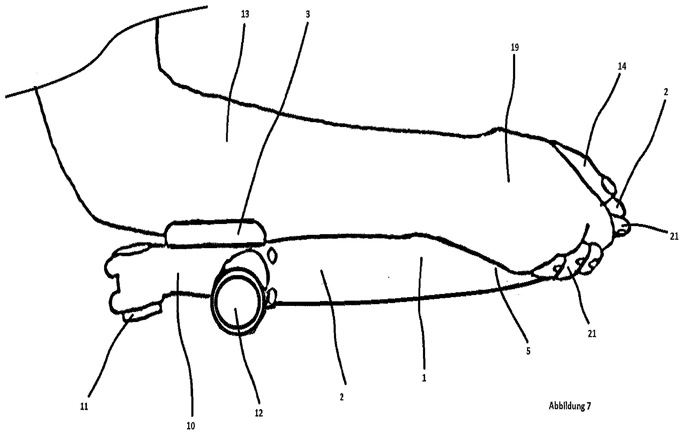

Abbildung 7 zeigt den Auflieger in der Ausführung für Rechtshänder von rechts gesehen mit Unterarm 13, rechter Hand 19 und Fingern der linken Hand 21 in Griffposition. Die Finger 18 der rechten Hand 19 liegen unter den Fingern der linken Hand 21 und werden in dieser Ansicht nahezu vollständig verdeckt.

## Patentansprüche

1. Fahrradlenker-Auflieger, insbesondere für Zeit- oder Triathlon-Fahrräder, mit
einem zentralen Halteelement (4), das in montiertem Zustand in Fahrtrichtung weist,
zwei Armauflagen (3), die jeweils seitlich neben dem Halteelement (4) angeordnet sind, und
einem einzigen gemeinsamen Griffelement (2), das an einem vorderen Bereich des einen einzigen Halteelements (4) angeordnet ist,
wobei das Griffelement (2) zu einer Längsrichtung zum gleichzeitigen Greifen mit beiden Händen unsymmetrisch ausgebildet ist, wobei sich die Hände in einer Greifposition teilweise überdecken,
**dadurch gekennzeichnet, dass**
das Griffelement (2) an seiner Oberseite zwei insbesondere einander gegenüberliegende Daumen-Auflagebereiche aufweist und
wobei zwischen und/oder unter den Daumen-Auflagebereichen zumindest ein Schaltelement (6, 7.) vorgesehen ist.

2. Fahrradlenker-Auflieger nach Anspruch 1, **dadurch gekennzeichnet, dass** ein hinterer Bereich des Halteelements (4) ein Klemm- und/oder Fixierelement zum Verbinden mit einem Lenker und/oder Lenkervorbau und/oder Steuerroh aufweist.

3. Fahrradlenker-Auflieger nach Anspruch 1 oder 2, **dadurch gekennzeichnet, dass** die Armauflagen (3) mit dem Halteelement (4) verbunden sind.

4. Fahrradlenker-Auflieger nach einem der Ansprüche 1 bis 3, **dadurch gekennzeichnet, dass** das Griffelement (2) derart ausgebildet ist, dass es von einer Hand vollständig umgriffen werden kann.

5. Fahrradlenker-Auflieger nach einem der Ansprüche 1 bis 4, **dadurch gekennzeichnet, dass** an einem vorderen Ende des Griffelements (2) zumindest ein Schaltelement (8) vorgesehen ist.

6. Fahrradlenker-Auflieger nach einem der Ansprüche 1 bis 5, **dadurch gekennzeichnet, dass** die Schaltelemente (6, 7, 8) zumindest teilweise als elektrische und/oder elektronische Schaltelemente ausgebildet sind.

7. Fahrradlenker-Auflieger nach einem der Ansprüche 1 bis 6, **dadurch gekennzeichnet, dass** mit dem Halteelement (4) zwei Zusatz-Armauflagen (5) insbesondere in einem mittleren Bereich des Halteelements verbunden sind.

8. Fahrradlenker-Auflieger nach einem der Ansprüche 1 bis 7, **dadurch gekennzeichnet, dass** mit dem Halteelement (4) eine Zusatz-Handauflage (5) insbesondere unterhalb des Griffelements (2) mit dem vorderen Bereich des Halteelements (4) verbunden ist.

9. Fahrradlenker-Auflieger nach einem der Ansprüche 1 bis 8, **dadurch gekennzeichnet, dass** an einer Oberseite des Halteelements (4) insbesondere im mittleren Bereich ein Aufnahmeelement für Zusatzinstrumente (9) vorgesehen ist.

10. Fahrradlenker-Auflieger nach einem der Ansprüche 1 bis 9, **dadurch gekennzeichnet, dass** das Halteelement (4) einen Hohlraum aufweist.

## Claims

1. Bicycle handlebar support, in particular for time trial bicycles or triathlon bicycles, comprising
a central holding element (4) directed in the traveling direction when in the mounted state,
two arm supports (3), each arranged laterally beside the holding element (4), and
a single common grip element (2) arranged at a front portion of the single holding element (4),
wherein for a simultaneous gripping with both hands, the grip element (2) is designed in particular to be asymmetric to a longitudinal direction, wherein the hands partially overlap in a gripping position, .
**characterized in that**
the grip element (2) has two, in particular opposite thumb support regions on its upper side, and wherein at least one switch element (6, 7) is provided between and/or below the thumb support regions.

2. Bicycle handlebar support according to claim 1, **characterized in that** a rear portion of the holding element (4) comprises a clamping and/or fixing element for connection with a handlebar and/or a handlebar stem and/or a head tube.

3. Bicycle handlebar support according to claim 1 or 2, **characterized in that** the arm supports (3) are connected with the holding element (4).

4. Bicycle handlebar support according to one of claims 1 to 3, **characterized in that** the grip element (2) is designed such that it can be gripped completely with one hand.

5. Bicycle handlebar support according to one of claims 1 to 4, **characterized in that** at least one switch element (8) is provided at a front end of the grip element (2).

6. Bicycle handlebar support according to one of claims 1 to 5, **characterized in that** the switch elements (6, 7, 8) are at least in part configured as electric and/or electronic switch elements.

7. Bicycle handlebar support according to one of claims 1 to 6, **characterized in that** two auxiliary arm supports (5) are connected with the holding element (4) in particular in a central region of the holding element.

8. Bicycle handlebar support according to one of claims 1 to 7, **characterized in that** an auxiliary hand support (5) is connected with the holding element (4) in the front portion of the holding element (4), in particular below the grip element (2).

9. Bicycle handlebar support according to one of claims 1 to 8, **characterized in that** a receiving element for auxiliary instruments (9) is provided in an upper side of the holding element (4), in particular in the central portion.

10. Bicycle handlebar support according to one of claims 1 to 9, **characterized in that** the holding element (4) comprises a cavity.

## Revendications

1. Appui pour guidon de vélo, en particulier pour des vélos de contre la montre ou de triathlon, comprenant
un élément de retenue (4) central qui, à l'état monté, est orienté dans le sens de la marche,
deux repose-bras (3) respectivement agencé latéralement à côté de l'élément de retenue (4), et
un élément formant poignée (2) commun unique agencé au niveau d'une région avant de l'élément de retenue (4) unique,
l'élément formant poignée (2) étant asymétrique par rapport à une direction longitudinale en vue d'une préhension simultanée avec les deux mains, les mains se recouvrant partiellement dans une position de préhension,
**caractérisé en ce que**
l'élément formant poignée (2) comprend sur sa face supérieure deux régions d'appui de pouce en particulier opposées l'une à l'autre, et au moins un élément de commutation (6, 7) est prévu entre et/ou sous les régions d'appui de pouce.

2. Appui pour guidon de vélo selon la revendication 1, **caractérisé en ce qu'**une région arrière de l'élément de retenue (4) comprend un élément de serrage et/ou de fixation permettant une liaison avec un guidon et/ou une potence de guidon et/ou un tube de direction.

3. Appui pour guidon de vélo selon la revendication 1 ou 2, **caractérisé en ce que** les repose-bras (3) sont reliés à l'élément de retenue (4).

4. Appui pour guidon de vélo selon l'une quelconque des revendications 1 à 3, **caractérisé en ce que** l'élément formant poignée (2) est réalisé de manière à pouvoir être saisi complètement par une seule main.

5. Appui pour guidon de vélo selon l'une quelconque des revendications 1 à 4, **caractérisé en ce qu'**au moins un élément de commutation (8) est prévu à une extrémité avant de l'élément formant poignée (2).

6. Appui pour guidon de vélo selon l'une quelconque des revendications 1 à 5, **caractérisé en ce que** les éléments de commutation (6, 7, 8) sont réalisés au moins partiellement sous la forme d'éléments de commutation électriques et/ou électroniques.

7. Appui pour guidon de vélo selon l'une quelconque des revendications 1 à 6, **caractérisé en ce que** deux repose-bras supplémentaires (5) sont reliés à l'élément de retenue (4), en particulier dans une région médiane de l'élément de support.

8. Appui pour guidon de vélo selon l'une quelconque des revendications 1 à 7, **caractérisé en ce qu'**un repose-main supplémentaire (5) est relié à l'élément de retenue (4), en particulier à la région avant de l'élément de retenue (4) sous l'élément formant poignée (2).

9. Appui pour guidon de vélo selon l'une quelconque des revendications 1 à 8, **caractérisé en ce qu'**un élément d'accueil destiné à des instruments supplémentaires (9) est prévu sur une face supérieure de l'élément de retenue (4), en particulier dans la région centrale.

10. Appui pour guidon de vélo selon l'une quelconque des revendications 1 à 9, **caractérisé en ce que** l'élément de retenue (4) présente une cavité.
